# EUROPÄISCHE PATENTANMELDUNG

(11) **EP 2 756 908 A1**
(43) Veröffentlichungstag der Anmeldung: **23.07.2014**
(21) Anmeldenummer: 13152060.3
(22) Anmeldetag: 21.01.2013
(51) Int. Cl.: B23K 9/04, B23K 26/34, B23P 6/00, F01D 5/00

(54) **Auftragsschweißen von länglichen, gekrümmten Oberflächen**

(71) Anmelder: Siemens Aktiengesellschaft, 80333 München (DE); Fraunhofer-Gesellschaft zur Förderung der angewandten Forschung e.V., 80686 München (DE)
(72) Erfinder: Arjakine, Nikolai, 10555 Berlin (DE); Burbaum, Bernd, 14612 Falkensee (DE); Gasser, Andres, 52066 Aachen (DE); Linnenbrink, Stefanie, 52372 Kreuzau (DE); Mehlhorn, Andre, 12307 Berlin (DE); Melzer-Jokisch, Torsten, 15366 Neuenhagen bei Berlin (DE); Mentzel, Frank, 52066 Aachen (DE); Ott, Michael, 45470 Mülheim an der Ruhr (DE); Pirch, Norbert, 52074 Aachen (DE)

(57) **Zusammenfassung**

Durch ein bestimmtes Auftragsmuster zur Erzeugung einer Auftragsschweißung auf eine längliche, gekrümmte Oberfläche, bei dem zuerst eine Konturlinie und dann einzelne Bahnen gelegt werden, wird eine sehr gut haftende Schweißung erzeugt.

## Beschreibung

Die Erfindung betrifft ein Verfahrmuster beim Auftragsschweißen von länglich gekrümmten Oberflächen.

Auftragsschweißen, insbesondere Laserauftragsschweißen, ist ein bekanntes Verfahren, um großflächig abgetragenes Material erneut aufzubauen oder neu zu generieren.

Dabei ergeben sich jedoch bei dem Aufbau mehrerer Schweißlagen oft Probleme.

Es ist daher Aufgabe der vorliegenden Erfindung ein Verfahren aufzuzeigen, bei dem o.g. Problem gelöst wird.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:

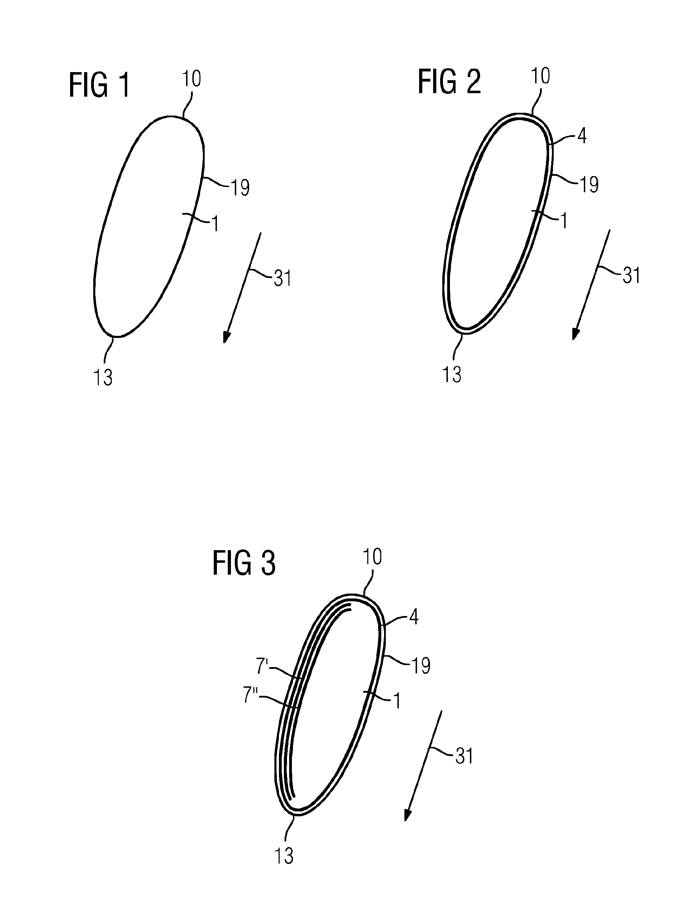

Figuren 1 bis 6 Ausführungsbeispiele der Erfindung.

Die Beschreibung und die Figuren stellen nur Ausführungsbeispiele der Erfindung dar.

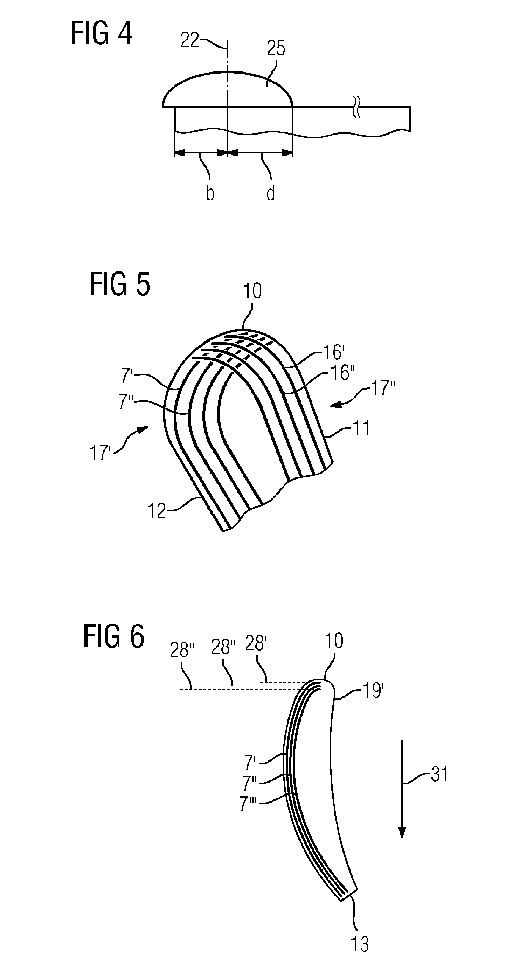

Figur 1 zeigt eine längliche, gekrümmt verlaufende Oberfläche 1 mit einer Außenkontur 19 und mit zwei gegenüberliegendem Anfang 10 und Ende 13, die am weitesten voneinander entfernt sind.
Die Oberfläche 1 weist eine Längsrichtung 31 auf, die vom Anfang 10 bis zum Ende 13 verläuft.
Hier ist das beispielsweise eine Ovalform, kann aber insbesondere auch bei Querschnittsflächen (Fig. 5, 6) von Turbinenschaufelblättern angewendet werden.

Auf diese Oberfläche 1 soll nun großflächig und vollständig Material aufgetragen werden. Dies geschieht dadurch, dass zuerst eine äußere Konturschweißung 4 entlang der Außenkontur 19 umrandend gelegt wird (Fig. 2), die insbesondere auch geschlossen verläuft.
Die Konturschweißung 4 weist vorzugsweise eine einzige Schweißbahn 25 oder Schweißraupe 25 auf.

Wie in Figur 4 dargestellt, weist eine Schweißspur 25 der äußeren Konturschweißung 4 eine Halbbreite d mit einer Breite 2xd auf.
Dabei wird die äußere Konturschweißung 4 vorzugsweise so gelegt, dass der Abstand b von einer Mittelsenkrechten 22 der Schweißspur 25 der äußeren Konturschweißung 4 bis zur Außenkontur 19 kleiner d beträgt, insbesondere mindestens 10%, aber maximal 90% der Breite d der äußeren Konturschweißung 4. Die Konturschweißung 4 nahe oder auf der Außenkontur 19 wird vorzugsweise unter einem deutlich von 90° verschiedenen Winkel eines Schweißstrahls zur Oberfläche 1 gelegt, insbesondere unter einem Winkel von 10° bis 15°.

Nachdem diese äußere Konturschweißung 4 gelegt ist, wird die innerhalb der äußeren Konturschweißung 4 liegende Fläche mit innenliegenden Schweißspuren 7', 7", ... (Fig. 3) versehen, die an einem Ende 10 beginnen und entlang der äußeren Konturschweißung 4 parallel verlaufen und vorzugsweise an einem gegenüberliegenden Ende 13 enden, also nicht geschlossen verlaufen und etwa die Hälfte des Umfangs der Oberfläche 1 ergeben.

Diese Vorgehensweise kann insbesondere bei Oberflächen 1 durchgeführt werden, die auf der einen Seite konvex und auf der anderen Seite konkav ausgebildet sind mit einer Außenkontur 19' wie in Figur 6, also vollständig gekrümmt verläuft. Eine zweite innere Schweißspur 7" verläuft parallel und überlappt die erste innere Schweißspur 7'. Dies wird wiederholt, bis die Fläche 1 vollständig durch eine erste Schweißlage 17' auftragsgeschweißt ist.

Die inneren Schweißspuren 7', 7", ... beginnen aufgrund einer Krümmung des Anfangs 10 nicht auf einer Höhe, sondern die Anfangspunkte 28', 28", ... sind in einer Längsrichtung 31 der länglichen Oberfläche verschoben (Fig. 6). Analog gilt dies für Schweißspuren weiterer Schweißlagen 17", ... (Fig. 5).

Soll eine weitere Schweißlage 17" erzeugt werden, so wird die zweite Lage von Schweißspuren 16', 16", ... vorzugsweise entsprechend so gelegt, dass sich die Schweißspuren 7', 7", ... der ersten Schweißlage und die Schweißspuren 16', 16", ... der zweiten Schweißlage 17" sich möglichst unter einem von 0° verschiedenen Winkel, insbesondere von 90° überlappen, wie es in Figur 5 dargestellt ist.
Für die erste Schweißlage 17' verlaufen die ersten Schweißspuren 16', 16", ... entlang der einen ersten Seite 12 der Oberfläche 1. Für die zweite Schweißlage 17" verlaufen die ersten Schweißspuren 16', 16", ... auf der zweiten Seite 11 der Oberfläche 1, die ersten Seite 12 gegenüberliegt.
Dies kann vorzugsweise abwechselnd wiederholt werden.

Äußere Konturschweißung 4 und innere Schweißspuren 7', 7", 16', 16", ... weisen vorzugsweise dieselben Materialien auf.

## Patentansprüche

1. Verfahren
zum Auftragsschweißen einer Oberfläche (1) mit einer länglichen, gekrümmten Außenkontur (19),
bei dem zuerst eine äußere Konturschweißung (4) entlang der Außenkontur (19),
insbesondere parallel zur Außenkontur (4),
gelegt wird,
wobei äußere Konturschweißung (4) die Außenkontur (19) vollständig umrandet,
insbesondere geschlossen verläuft,
und dann innerhalb der äußeren Konturschweißung (4) nicht geschlossen verlaufende, innenliegende Schweißspuren (7', 7", ...) ,
insbesondere parallel verlaufend zu der äußeren Konturschweißung (4),
gelegt werden,
bis die Oberfläche (1) vollständig auftragsgeschweißt ist.

2. Verfahren nach Anspruch 1,
bei dem die Außenkontur (4) oval geformt ist.

3. Verfahren nach Anspruch 1,
bei dem die Außenkontur (4) eine konvexe Seite und eine konkave Seite aufweist.

4. Verfahren nach einem oder beiden der Ansprüche 1 oder 3,
bei dem eine Querschnittsfläche eines Turbinenschaufelblatts senkrecht zur Längsrichtung (31) auftragsgeschweißt wird.

5. Verfahren nach einem oder mehreren der Ansprüche 1, 2, 3 oder 4,
bei dem die innenliegenden, nicht geschlossen verlaufenden Schweißspuren (7', 7", ...; 16', 16", ...) von einem Anfang (10) der Oberfläche (1) zum gegenüberliegenden Ende (13) der Oberfläche (1) verlaufen.

6. Verfahren nach einem oder mehreren der vorherigen Ansprüche 1 bis 5,
bei dem die Anfangspunkte (28', 28", ...) der direkt benachbarten, innenliegenden Schweißspuren (7', 7", ...) in der Längsrichtung (31) verschoben sind.

7. Verfahren nach einem oder mehreren der vorherigen Ansprüche 1 bis 6,
bei dem die äußere Konturschweißung (4) als Schweißspur (25) eine Halbbreite (d) und eine Mittelsenkrechte (22) aufweist und
der Abstand der Mittelsenkrechten (22) der äußeren Konturschweißung (4) der Außenkontur (19) der Oberfläche (1) deutlich weniger als die Hälfte der Halbbreite (d) beträgt, insbesondere mindestens 10%,
ganz insbesondere mindestens 20% weniger.

8. Verfahren nach einem oder mehreren der Ansprüche 1 bis 7,
bei dem für eine zweite Schweißlage (17") auf einer die Oberfläche (1) vollständig bedeckenden ersten Schweißlage (17') einzelne Schweißspuren (16', 16", ...) die unterliegenden innenliegenden Schweißspuren (7', 7", ...) möglichst unter einem deutlich von 0° verschiedenen,
insbesondere senkrechten,
Winkel schneiden.

9. Verfahren nach einem oder mehreren der Ansprüche 1 bis 8,
bei dem die Schweißspuren (7', 7", ...) der ersten Schweißlage (17') auf der Oberfläche (1) an einer ersten Seite (12) am Rande beginnend gelegt werden und die Oberfläche (1) vollständig bedecken,
und bei dem die Schweißspuren (16', 16", ...) der zweiten Schweißlage (17") auf einer der der ersten Seite (12) gegenüberliegenden Seite (11) am Rande beginnend gelegt werden.

10. Verfahren nach einem oder mehreren der Ansprüche 1 bis 9,
bei dem die Konturschweißung (4) nahe oder auf der Außenkontur (19) unter einem deutlich von 90° verschiedenen Winkel eines Schweißstrahls zur Oberfläche (1) gelegt wird, insbesondere unter einem Winkel von 10° bis 15° zur Senkrechten der Oberfläche (1).
